# FASCICULE DE BREVET EUROPEEN

(11) **EP 3 581 856 B1**
(45) Date de publication et mention de la délivrance du brevet: **29.09.2021**
(21) Numéro de dépôt: 19178637.5
(22) Date de dépôt: 06.06.2019
(51) Int. Cl.: F24F 110/20, F24F 110/70, F24F 13/20, F24F 13/14, F24F 3/044, F24F 13/04, F24F 11/74, F24F 7/08, F24F 13/06, F24F 7/06

(54) **DISPOSITIF DE VENTILATION POUR LA VENTILATION ET LE CHAUFFAGE OU LA CLIMATISATION DE L'ESPACE INTERIEUR D'UNE CONSTRUCTION**
BELÜFTUNGSVORRICHTUNG ZUM BELÜFTEN UND HEIZEN ODER KLIMATISIEREN DES INNENRAUMS EINES BAUWERKS
VENTILATION DEVICE FOR VENTILATION AND HEATING OR AIR CONDITIONING OF THE INSIDE SPACE OF A BUILDING

(30) Priorité: 11.06.2018 FR 1855060; 11.06.2018 FR 1855061
(43) Date de publication de la demande: 18.12.2019
(73) Titulaire: Ventilairsec, 44220 Coueron (FR)
(72) Inventeur: POTARD, Michèle, 44800 Saint Herblain (FR); BARDOUL, Claude, 44800 Saint Herblain (FR); LAFFETER, Clément, 44100 Nantes (FR); ESCAICH, Julien, 44220 Coueron (FR)
(74) Mandataire: Ipsilon

(56) Documents cités:
- EP-A1- 2 716 478
- WO-A1-2016/104053
- FR-A1- 2 977 005
- JP-U- S5 876 411
- US-A- 2 702 456
- US-A- 3 921 413
- US-A- 5 931 227

## Description

L'invention concerne un dispositif de ventilation pour la ventilation et le chauffage ou la climatisation de l'espace intérieur d'une construction.

Elle concerne plus particulièrement un dispositif de ventilation pour la ventilation et le chauffage ou la climatisation de l'espace intérieur d'une construction comportant une multiplicité d'espaces à ventiler, ce dispositif comprenant un caisson délimité par des parois, ledit caisson logeant un générateur d'un flux d'air, tel qu'un ventilateur, délimitant à l'intérieur du caisson une zone s'étendant en amont du générateur de flux d'air et une zone s'étendant en aval du générateur de flux d'air pris par rapport au sens de circulation du flux d'air à l'intérieur du caisson, ledit caisson comprenant au niveau de la zone aval au moins deux bouches de soufflage d'air dites gainables, c'est-à-dire raccordables par une gaine à un espace à ventiler et au moins une cloison divisant ladite zone aval en une première chambre équipée d'au moins une partie d'un système de chauffage et/ou de refroidissement d'air et une deuxième chambre ; les première et deuxième chambres comprenant chacune au moins deux sorties d'air obturables, au moins l'une des sorties d'air de la première chambre et au moins l'une des sorties d'air de la deuxième chambre débouchant dans une même bouche de soufflage.

### ART ANTÉRIEUR

Un dispositif de ventilation du type précité est décrit dans la demande internationale WO 2016/104053.

La qualité de l'air intérieur, son effet sur la santé humaine et ses coûts économiques et sociaux préoccupent de plus en plus la population. Plusieurs études ont montré qu'il est primordial de ventiler les locaux fermés, en apportant de l'air neuf de l'extérieur, afin d'assurer une ambiance saine.

D'autre part, les bâtiments sont de mieux en mieux isolés et étanches à l'air extérieur. Il en résulte une consommation en chauffage de plus en plus faible.

Ceci a permis, au cours des dernières années, la démocratisation des systèmes de chauffage par air. Les systèmes de chauffage par air sont alimentés en un air intérieur à la construction. Cet air est chauffé ou refroidi avant d'être réinjecté dans la construction.

L'augmentation de l'isolation et de l'étanchéité à l'air des bâtiments a dans le même temps contribué à augmenter le risque de pollution intérieure et ses effets sur la santé des occupants et de l'habitat, puisque la construction ne respire plus, comme cela était le cas pour les bâtiments moins étanches à l'air.

Dans ce cadre, le système le plus classique consiste à traiter la ventilation d'air neuf par un système indépendant du système de climatisation/chauffage. La ventilation d'air neuf est alors traitée avec un système classique type VMC (ventilation mécanique contrôlée) simple flux, comprenant des entrées d'air neuf dans la ou les pièces principales et des bouches d'extraction d'air vicié dans la ou les pièces techniques. Toutefois, cette solution s'avère peu performante. En effet, l'association d'une VMC type simple flux avec un système de climatisation de type gainable peut générer des perturbations aérauliques avec les entrées d'air situées dans chaque pièce principale.

Pour ces raisons, la principale solution proposée à l'heure actuelle consiste à utiliser des systèmes VMC double flux. L'extraction est réalisée comme un simple flux dans les pièces de service et l'insufflation d'air neuf se fait depuis une entrée unique, le plus souvent située sous les combles ou sur le toit, jusque dans les pièces principales, par un réseau de conduits reliés à un motoventilateur. Toutefois, cette solution s'avère présenter un prix de revient important, en raison de la nécessité de multiplier les groupes et les conduits de ventilation.

A ce jour, il n'existe pas de solution simple et combinée permettant d'assurer le chauffage et la ventilation de manière indépendante, c'est-à-dire en ajustant la qualité de l'air et la température dans chacun des espaces à ventiler à chauffer à partir d'un seul et même dispositif.

Un but de l'invention est de proposer un dispositif de ventilation de conception simplifiée sans nuire aux capacités de ventilation et de chauffage de plusieurs espaces en ajustant pour chaque espace les besoins en air neuf et en chauffage.

Un autre but de l'invention est de proposer un dispositif de ventilation dont la conception ne nécessite qu'un seul générateur de flux d'air pour assurer les fonctions de chauffage et de ventilation individualisées par espace.

Un autre but de l'invention est de proposer un dispositif de ventilation dont la conception permet une réalisation compacte sous forme d'un caisson pouvant intégrer l'ensemble des éléments de pilotage du dispositif.

A cet effet, l'invention a pour objet un dispositif de ventilation pour la ventilation et le chauffage ou la climatisation de l'espace intérieur d'une construction, ledit dispositif comprenant un caisson délimité par des parois, ledit caisson logeant un générateur d'un flux d'air, tel qu'un ventilateur, délimitant à l'intérieur du caisson une zone s'étendant en amont du générateur de flux d'air et une zone s'étendant en aval du générateur de flux d'air pris par rapport au sens de circulation du flux d'air à l'intérieur du caisson, ledit caisson comprenant au niveau de la zone aval au moins deux bouches de sortie d'air dites gainables et au moins une cloison divisant ladite zone aval en une première chambre équipée d'au moins une partie d'un système de chauffage et/ou de refroidissement d'air et une deuxième chambre, les première et deuxième chambres comprenant chacune au moins deux sorties d'air obturables, au moins l'une des sorties d'air de la première chambre et au moins l'une des sorties d'air de la deuxième chambre débouchant dans une même bouche de sortie d'air, caractérisé en ce que la deuxième chambre est dépourvue de système de chauffage et/ou de refroidissement d'air et en ce que le caisson est équipé au niveau de la zone amont d'au moins deux entrées d'air obturables, aptes à être alimentées, l'une, dite entrée d'air extérieur, en air pris à l'extérieur de la construction, l'autre, dite entrée d'air intérieur, en air pris à l'intérieur de la construction, ces entrées d'air étant munies chacune d'au moins un organe d'obturation et d'au moins un organe de commande d'entraînement en déplacement dudit au moins un organe d'obturation entre une position ouverte et une position fermée.

La division à l'aide du générateur de flux d'air de l'espace intérieur du caisson en une zone amont et une zone aval permet d'utiliser la zone amont munie d'au moins deux entrées d'air en une zone de mélange de l'air pour assurer l'apport d'air neuf nécessaire à la qualité de l'air et la zone aval au traitement thermique de l'air, ce traitement thermique pouvant être individualisé en fonction des espaces à ventiler grâce à la conception des bouches de soufflage permettant d'utiliser les gaines de distribution raccordables auxdites bouches comme zone de mélange de l'air traité thermiquement et de l'air non traité thermiquement. Il en résulte un dispositif compact se présentant sous forme d'un simple caisson avec une gestion centralisée des fonctions de chauffage et de ventilation.

Selon un mode de réalisation de l'invention, l'organe d'obturation d'au moins l'une des entrées d'air est une vanne papillon et l'organe de commande d'entraînement en déplacement dudit organe d'obturation, un moteur.

Selon un mode de réalisation de l'invention, la zone amont est équipée intérieurement d'au moins un filtre interposé entre les entrées d'air et le générateur de flux d'air.

Selon un mode de réalisation de l'invention, les sorties d'air obturables de la première chambre et de la deuxième chambre qui débouchent dans une même bouche de sortie d'air sont munies chacune au moins d'un organe d'obturation et d'un organe de commande d'entraînement en déplacement dudit organe d'obturation entre une position ouverte et une position fermée.

De préférence, ledit organe d'obturation est un organe d'obturation individuel. La présence d'organe d'obturation mobile indépendant en déplacement au niveau de la sortie de chaque chambre permet d'ajuster le débit d'air nécessaire au confort thermique dans chacun des espaces à traiter tout en offrant un réglage fin.

Selon un mode de réalisation de l'invention, l'organe d'obturation d'au moins l'une des sorties d'air est une vanne papillon et l'organe de commande d'entraînement en déplacement dudit organe d'obturation, un moteur.

Selon un mode de réalisation de l'invention, le système de chauffage et/ou de refroidissement comprend un échangeur de chaleur air/air et/ou un échangeur air/liquide et/ou une pompe à chaleur et/ou au moins une résistance électrique. Ce système de chauffage et/ou de refroidissement peut être logé partiellement ou totalement à l'intérieur du caisson selon son mode de réalisation.

Selon un mode de réalisation de l'invention, au moins l'une des bouches de sortie d'air s'étend extérieurement en saillie de la paroi du caisson pour former un tronçon de conduit. Le tronçon de conduit est apte à coopérer par emboîtement avec une gaine. Il en résulte un positionnement aisé de la gaine sur la bouche de sortie par simple emboîtement.

Selon un mode de réalisation de l'invention, le dispositif de ventilation comprend une unité de pilotage configurée pour piloter au moins les organes de commande d'entraînement en déplacement des organes d'obturation des entrées d'air. Cette unité de pilotage permet un positionnement automatique des organes d'obturation par actionnement automatique des organes de commande d'entraînement en déplacement des organes d'obturation.

Selon un mode de réalisation de l'invention, le dispositif de ventilation comprend des moyens de fourniture de données à ladite unité de pilotage, et l'unité de pilotage est configurée pour piloter au moins les organes de commande d'entraînement en déplacement des organes d'obturation des entrées d'air en fonction desdites données.

Selon un mode de réalisation de l'invention, les moyens de fourniture de données à ladite unité de pilotage comprennent au moins un capteur de température et un capteur de la qualité d'air.

### BRÈVE DESCRIPTION DES FIGURES

L'invention sera bien comprise à la lecture de la description suivante d'exemples de réalisation, en référence aux dessins annexés dans lesquels :
- La figure 1 représente une vue schématique d'une construction équipée d'un dispositif de ventilation conforme à l'invention.

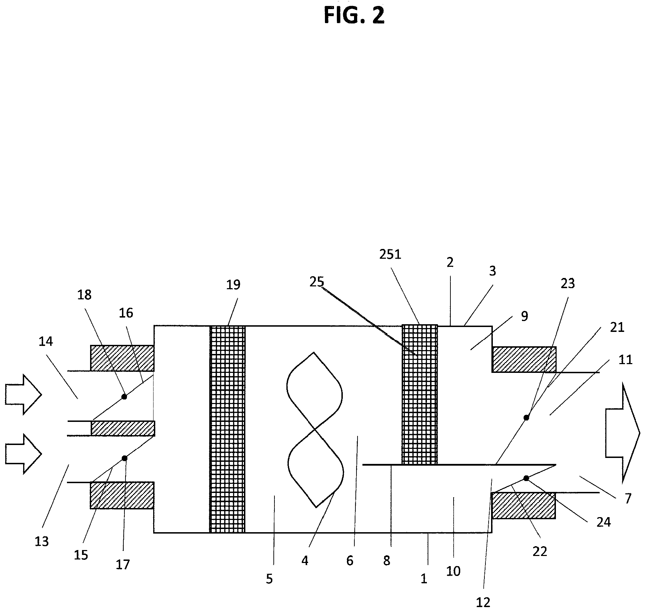

- La figure 2 représente une vue de principe d'un dispositif de ventilation conforme à l'invention.
- La figure 3 représente une vue partielle en perspective du caisson d'un dispositif de ventilation conforme à l'invention, certaines parties ayant été enlevées pour mieux visualiser l'intérieur du caisson.

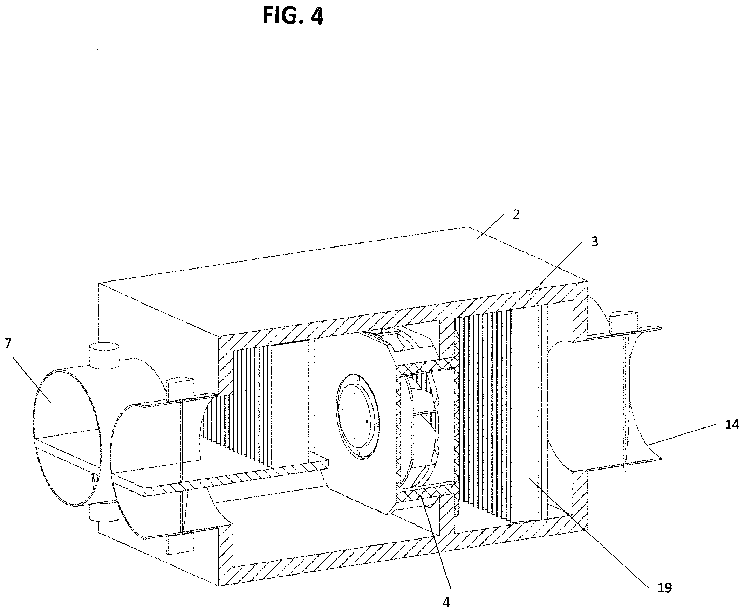

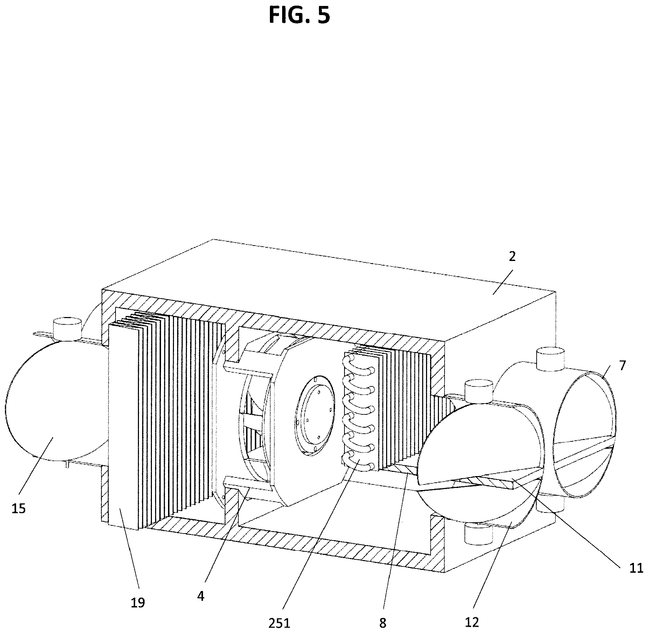

- Les figures 4 et 5 représentent chacune, prise sous un autre angle, une vue du dispositif de ventilation de la figure 3.

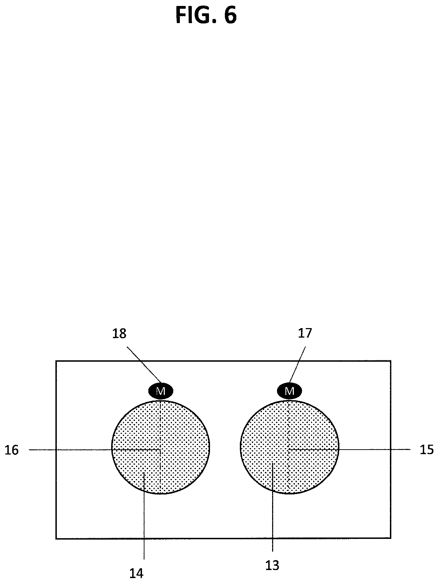

- La figure 6 représente une vue schématique de la face d'un caisson équipée de deux entrées d'air.
- La figure 7 représente une vue schématique de la face d'un caisson équipée de deux bouches de sortie d'air.

### DESCRIPTION DETAILLEE

Comme mentionné ci-dessus, l'invention a pour objet un dispositif 1 de ventilation pour la ventilation et le chauffage ou la climatisation de l'espace intérieur d'une construction 30 comportant une multiplicité d'espaces 31, tels que des pièces de la construction 30 à ventiler. En particulier, un tel dispositif 1 de ventilation permet la production d'un flux d'air apte à mettre l'espace intérieur de la construction 30 en légère surpression par rapport à l'atmosphère extérieure.

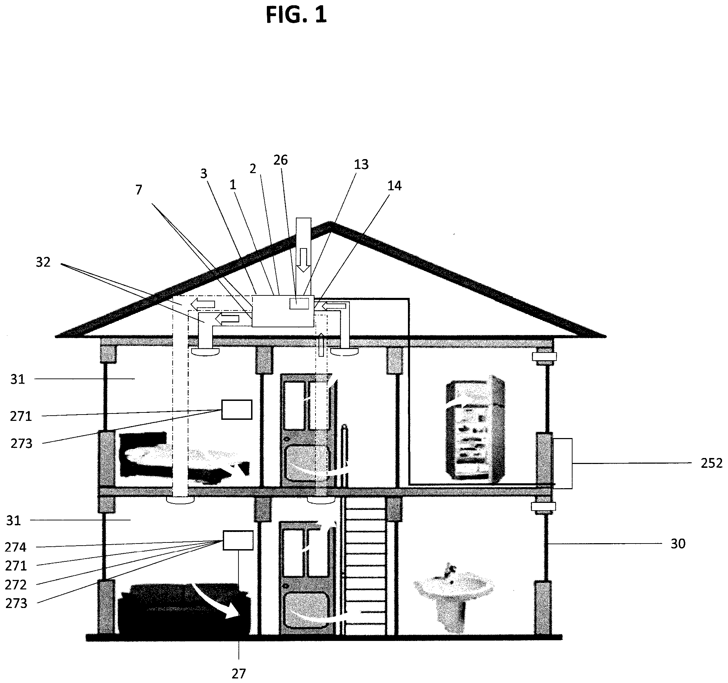

Ce dispositif 1 de ventilation peut être installé dans les combles de la construction 30, comme illustré à la figure 1.

Ce dispositif 1 comprend un caisson 2 comprenant au moins deux entrées 13, 14 d'air et au moins deux bouches 7 de sortie d'air. Le nombre de bouches de sortie d'air est fonction du nombre de zones 31 de la construction à ventiler, chaque bouche 7 de sortie d'air dite gainable étant raccordable par l'intermédiaire d'une gaine 32 à la zone 31 à ventiler.

Cette gaine 32 est généralement pourvue, à son extrémité, d'un diffuseur d'air comme représenté.

Dans les exemples représentés, le caisson 2 est équipé à chaque fois de deux bouches 7 de sortie d'air. Le caisson 2 est délimité par des parois 3 et chaque bouche 7 de sortie d'air s'étend extérieurement en saillie d'une paroi 3 du caisson pour former un tronçon de conduit. Il en résulte une facilité de montage à emboîtement de la gaine 32 sur la bouche 7 de sortie d'air par emmanchement de la gaine 32 sur la bouche 7 de sortie d'air.

Les entrées d'air du caisson 2 comprennent quant à elles au moins une entrée d'air extérieur 13 apte à être alimentée en air pris à l'extérieur de la construction 30.

À cet effet, dans l'exemple représenté, une gaine relie une ouverture ménagée dans la toiture de la construction à l'entrée 13 d'air extérieur du caisson.

Cette entrée 13 d'air extérieur du caisson 2 est équipée d'un organe 15 d'obturation et d'un organe 17 de commande en déplacement de l'organe 15 d'obturation entre une position fermée et une position ouverte.

Dans l'exemple représenté, l'organe 15 d'obturation est une vanne papillon et l'organe 17 de commande en déplacement de l'organe 15 d'obturation est un moteur.

Les entrées d'air du caisson 2 comprennent encore une ou plusieurs entrées 14 d'air intérieur. Dans les exemples représentés autres qu'à la figure 1, le caisson 2 est à chaque fois équipé d'une seule entrée 14 d'air intérieur apte à être alimentée en air pris à l'intérieur de la construction. Dans la figure 1, une deuxième entrée d'air intérieur est représentée en pointillé. Ainsi, une première entrée 14 d'air intérieur est reliée par une gaine à une zone de la construction prise au niveau de l'étage de la construction, tandis qu'une deuxième entrée 14 d'air intérieur pourrait être reliée par une gaine à une zone de la construction prise au niveau du rez-de-chaussée de la construction.

Il doit être noté que chaque entrée 14 d'air intérieur est équipée d'un organe 16 d'obturation et d'un organe 18 de commande en déplacement dudit organe 16 d'obturation entre une position fermée et une position ouverte. A nouveau, l'organe 16 d'obturation est une vanne papillon et l'organe 18 de commande en déplacement de l'organe 16 d'obturation un moteur.

Dans les exemples représentés, les entrées d'air 13, 14 et les bouches 7 de sortie d'air sont disposées sur deux faces opposées du caisson 2. Ce caisson 2 se présente sous forme d'un corps creux représenté ici de forme générale parallélépipédique. Ce caisson 2 loge un générateur 4 d'un flux d'air formé ici par un ventilateur ou un motoventilateur. Ce générateur 4 de flux d'air est ici inséré dans une cloison intérieure du caisson et divise le caisson 2 en deux zones, à savoir une zone 5 s'étendant en amont du générateur 4 de flux d'air et appelée zone amont et une zone 6 s'étendant en aval du générateur de flux d'air, appelée zone aval, par rapport au sens de circulation du flux d'air à l'intérieur du caisson, ce flux d'air circulant depuis les entrées d'air du caisson en direction des bouches 7 de sortie. En effet, comme mentionné ci-dessus, le caisson 2 comprend au niveau de la zone 6 aval au moins deux bouches 7 de sortie d'air, dites gainables, c'est-à-dire sur lesquelles une gaine est apte à être raccordée. Les bouches 7 de sortie d'air, encore appelées bouches de soufflage d'air, sont ménagées dans une paroi du caisson au niveau de la zone 6 aval tandis que les entrées d'air sont ménagées dans une paroi du caisson 2 au niveau de la zone 5 amont. Ainsi, l'air circule à l'intérieur du caisson depuis les entrées d'air vers les bouches 7 de sortie d'air. Pour permettre la diffusion d'air propre, la zone 5 amont est équipée intérieurement d'un filtre 19 interposé entre les entrées 13 et 14 d'air et le générateur 4 de flux d'air.

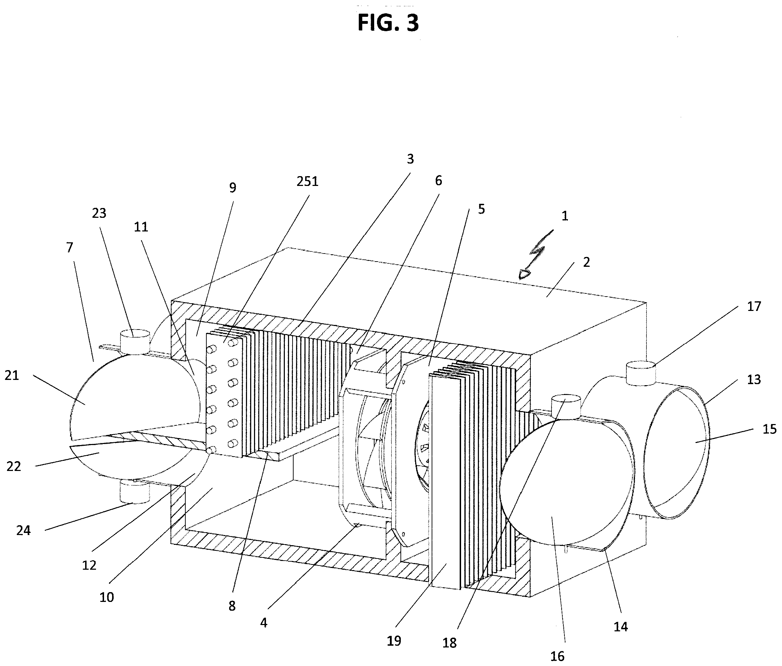

Le caisson 2 comprend encore, au niveau de la zone 6 aval, au moins une cloison 8 divisant cette zone 6 aval en une première chambre 9 équipée d'au moins une partie d'un système 25 de chauffage et/ou de refroidissement d'air et une deuxième chambre 10 exempte de système de chauffage et/ou de refroidissement d'air. Ces première et deuxième chambres sont, dans les exemples représentés, disposées l'une au-dessus de l'autre et la paroi 8 qui les sépare est une paroi horizontale. Ces première et deuxième chambres peuvent potentiellement communiquer entre elles. Ces chambres sont traversées en parallèle par le flux d'air généré par le générateur 4 de flux d'air. En effet, la cloison 8 sépare le flux d'air issu du générateur 4 de flux d'air en deux flux, l'un traversant la première chambre 9, l'autre traversant la deuxième chambre 10. La première chambre 9 est équipée d'au moins une partie d'un système 25 de chauffage et/ou de refroidissement d'air de sorte que l'air qui circule à travers cette première chambre 9 peut être traité thermiquement. Le système 25 de chauffage et/ou de refroidissement équipant cette première chambre peut être formé par une simple résistance électrique apte à être alimentée en courant. Ce système 25 de chauffage et/ou de refroidissement peut être formé par un échangeur de chaleur air-air ou air-eau, tel que représenté à la figure 3. Dans le cas d'un échangeur air-eau, l'eau qui circule dans l'échangeur est refroidie en mode climatisation ou chauffée en mode chauffage et l'air du flux d'air du générateur de flux se refroidit ou se réchauffe par conduction au contact des conduits de circulation d'eau.

Ce système 25 de chauffage et de refroidissement peut encore être une pompe à chaleur, comme dans l'exemple représenté à la figure 1. Ce système 25 de chauffage et/ou de refroidissement peut comprendre un échangeur 251 de chaleur intérieur logé dans le caisson et un échangeur 252 de chaleur déporté, dit extérieur, lesdits échangeurs de chaleur intérieur et extérieur étant reliés par une liaison de fluide caloporteur, les deux échangeurs de chaleur jouant l'un, le rôle d'un évaporateur, l'autre, le rôle du condenseur.

Dans ce cas, l'échangeur de chaleur déporté joue le rôle de condenseur en été lorsque le dispositif est utilisé en mode climatiseur et d'évaporateur en hiver lorsque le dispositif est utilisé en mode pompe à chaleur, pour le chauffage de la construction.

Il est également prévu des moyens de circulation forcée d'air, tels qu'un ventilateur, permettant de faire circuler l'air extérieur à travers l'échangeur de chaleur déporté et un compresseur permettant de faire circuler le fluide caloporteur dans la liaison fluidique entre les échangeurs de chaleur intérieur et extérieur.

L'échangeur de chaleur intérieur joue le rôle inverse de l'échangeur extérieur, c'est-à-dire le rôle d'un évaporateur en mode climatisation du dispositif et d'un condenseur en mode chauffage.

Chaque chambre 9, 10 du caisson est équipée d'au moins deux sorties d'air. Généralement, le nombre de sorties d'air de chaque chambre est égal au nombre de bouches 7 de sortie d'air du caisson.

Le dispositif comprenant ici deux bouches 7 de sortie d'air, il est prévu deux sorties d'air par chambre. Les sorties d'air de la première chambre 9 sont représentées en 11, tandis que les sorties d'air de la deuxième chambre 10 sont représentées en 12. À chaque fois, une sortie 11 d'air de la première chambre 9 et une sortie 12 d'air de la deuxième chambre 10 débouchent et en l'occurrence ici sont ménagées dans une même bouche 7 de sortie d'air.

Ces sorties d'air sont, au niveau de la bouche 7 de sortie d'air, séparées l'une de l'autre par le système de cloisonnement du caisson qui sert également à la délimitation des première et deuxième chambres 9 et 10. Ainsi, lorsqu'une gaine 32 est rapportée sur la bouche 7 de sortie d'air, elle peut être alimentée à la fois en air issu de la première chambre 9 et en air issu de la deuxième chambre 10 du caisson 2. Le mélange entre les flux d'air s'opère dans la gaine 32.

Chaque sortie 11, 12 d'une même bouche 7 de sortie d'air est munie d'un organe d'obturation. Ainsi, la sortie 11 d'air de la première chambre 9 est munie d'un organe 21 d'obturation, tandis que la sortie 12 d'air de la deuxième chambre 10 est munie d'un organe 22 d'obturation.

Grâce à ces organes d'obturation, la gaine 32 rapportée sur la bouche 7 de sortie d'air peut être alimentée uniquement en air issu de la première chambre ou uniquement en air issu de la deuxième chambre ou en un mélange des deux.

Ces organes 21 et 22 d'obturation sont des organes d'obturation individuels, c'est-à-dire indépendants en déplacement et chaque organe 21, 22 d'obturation est équipé de son organe 23, 24 de commande d'entraînement en déplacement. Ainsi, l'organe 21 d'obturation de la sortie 11 d'air de la première chambre 9 est une vanne papillon et l'organe de commande d'entraînement en déplacement, représenté en 23 aux figures, est un moteur.

De même, l'organe 22 d'obturation de la sortie 12 d'air de la deuxième chambre 10 est une vanne papillon dont l'organe de commande d'entraînement en déplacement, représenté en 24 aux figures, est un moteur.

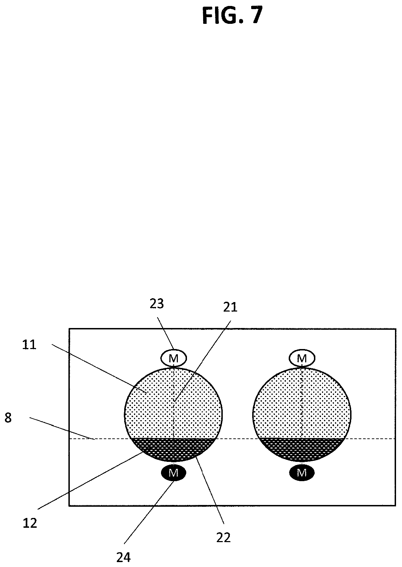

Les moteurs sont disposés de manière diamétralement opposée, sur le tronçon de conduit en saillie de la paroi, et les vannes papillon pivotent autour d'axes alignés comme illustré à la figure 7.

Chaque organe d'obturation affecte la forme d'une portion de disque pivotant autour d'un arbre.

L'arbre s'étend entre le système de cloisonnement du caisson et l'arbre moteur, de manière coaxiale audit arbre moteur, cet arbre pivot formant un prolongement de l'arbre moteur.

Ainsi, le déplacement de chaque organe d'obturation entre la position fermée et la position ouverte s'opère par simple entraînement en rotation de l'arbre moteur. Du fait de la présence d'un organe d'obturation par sortie, il en résulte la possibilité d'alimenter la gaine raccordable sur la bouche 7 de soufflage d'air, soit uniquement à partir de l'air éventuellement traité thermiquement issu de la première chambre, soit uniquement à partir de l'air non traité thermiquement issu de la deuxième chambre, soit à partir d'un air issu des deux chambres, le mélange s'opérant dans la gaine.

Pour parfaire l'ensemble, le dispositif 1 de ventilation comprend une unité 26 de pilotage configurée pour piloter au moins les organes 17, 18 de commande d'entraînement en déplacement des organes 15, 16 d'obturation des entrées 13, 14 d'air et les organes 23, 24 de commande d'entraînement en déplacement des organes 21, 22 d'obturation des sorties 11, 12 d'air des première et deuxième chambres 9 et 10.

Cette unité 26 de pilotage comprend des moyens de traitement électronique et/ou informatique de données, tels qu'un processeur associé à une mémoire de travail. Lorsque l'expression "l'unité de pilotage est configurée pour" est utilisée, cela signifie que le processeur comprend des instructions pour réaliser l'action. Cette unité 26 de pilotage est donc également configurée pour piloter le générateur de flux d'air, et en particulier piloter le circuit électronique de puissance qui alimente en énergie électrique le générateur 4 de flux d'air. Cette unité 26 de pilotage est également configurée pour piloter le système 25 de chauffage et/ou de refroidissement. Comme mentionné ci-dessus, ce système 25 de chauffage et/ou de refroidissement peut être formé par une simple résistance électrique. Dans ce cas, le système 25 de chauffage et/ou de refroidissement peut être entièrement disposé dans le caisson 2 et l'unité de pilotage est configurée pour piloter le circuit électronique et/ou électrique de puissance qui alimente en énergie électrique la résistance électrique.

Pour permettre un tel pilotage, le dispositif 1 de ventilation comprend des moyens 27 de fourniture de données à ladite unité 26 de pilotage. L'unité 26 de pilotage est configurée pour piloter au moins les organes 17, 18 de commande d'entraînement en déplacement des organes 15, 16 d'obturation des entrées 13 et 14 d'air en fonction desdites données, mais également le générateur 4 de flux d'air et le système 25 de chauffage et/ou de refroidissement et les organes 23 et 24 de commande d'entraînement en déplacement des organes 21 et 22 d'obturation des sorties 11 et 12 des première et deuxième chambres 9 et 10 au moins en fonction desdites données.

Les moyens 27 de fourniture de données peuvent affecter un grand nombre de formes. Ces moyens 27 de fourniture de données à ladite unité 26 de pilotage comprennent au moins un capteur de température 271 et un capteur de la qualité d'air 272 dont les signaux sont transmis à ladite unité 26.

Le capteur de qualité d'air peut être un capteur de CO₂, un capteur d'humidité ou autre. Les signaux générés par lesdits capteurs sont aptes à être transmis à l'unité de pilotage par liaison filaire ou sans fil. Les moyens 27 de fourniture de données peuvent encore comprendre une interface homme/machine et/ou une mémoire de stockage de données prédéfinies, configurées pour adresser à l'unité de pilotage une consigne de température et une consigne de qualité de l'air par zone à ventiler ou des données aptes à permettre le calcul desdites consignes.

L'interface homme/machine peut être formée par une télécommande, un clavier, un thermostat 273, un programmateur 274 ou autre.

L'unité de pilotage est configurée pour, à partir des données mesurées par les capteurs et les consignes de température et de qualité d'air reçues ou mémorisées ou calculées, générer des signaux de commande :
- des organes de commande d'entraînement en déplacement des organes d'obturation des entrées et des sorties d'air du caisson,
- du générateur de flux d'air,
- du système de chauffage et/ou de refroidissement.

Grâce à cette possibilité offerte d'agir sur un grand nombre d'actionneurs, il en résulte un pilotage fin de l'air circulant dans la construction.

Grâce à la réalisation du dispositif sous forme d'un caisson intégrant l'ensemble des éléments à commander, il en résulte une simplicité de fabrication et de pose du dispositif.

## Revendications

1. Dispositif (1) de ventilation pour la ventilation et le chauffage ou la climatisation de l'espace intérieur d'une construction (30), ledit dispositif (1) comprenant un caisson (2) délimité par des parois (3), ledit caisson (2) logeant un générateur (4) d'un flux d'air, tel qu'un ventilateur, délimitant à l'intérieur du caisson (2) une zone (5) s'étendant en amont du générateur (4) de flux d'air et une zone (6) s'étendant en aval du générateur (4) de flux d'air pris par rapport au sens de circulation du flux d'air à l'intérieur du caisson (2), ledit caisson (2) étant équipé au niveau de la zone (5) amont d'au moins deux entrées (13, 14) d'air obturables, aptes à être alimentées, l'une, dite entrée (13) d'air extérieur, en air pris à l'extérieur de la construction (30), l'autre, dite entrée (14) d'air intérieur, en air pris à l'intérieur de la construction (30), ledit caisson (2) comprenant au niveau de la zone (6) aval au moins deux bouches (7) de sortie d'air dites gainables et au moins une cloison (8) divisant ladite zone (6) aval en une première chambre (9) équipée d'au moins une partie d'un système (25) de chauffage et/ou de refroidissement d'air et une deuxième chambre (10), les première et deuxième chambres (9 ; 10) comprenant chacune au moins deux sorties (11 ; 12) d'air obturables, au moins l'une des sorties (11) d'air de la première chambre (9) et au moins l'une des sorties (12) d'air de la deuxième chambre (10) débouchant dans une même bouche (7) de sortie d'air, **caractérisé en ce que** la deuxième chambre (10) est dépourvue de système de chauffage et de refroidissement d'air et **en ce que** les entrées (13, 14) d'air de la zone (5) amont du caisson (2) sont munies chacune d'au moins un organe (15, 16) d'obturation et d'au moins un organe (17, 18) de commande d'entraînement en déplacement dudit au moins un organe (15, 16) d'obturation entre une position ouverte et une position fermée.

2. Dispositif (1) de ventilation selon la revendication 1, **caractérisé en ce que** l'organe (15, 16) d'obturation d'au moins l'une des entrées (13, 14) d'air est une vanne papillon et l'organe (17, 18) de commande d'entraînement en déplacement dudit organe (15, 16) d'obturation, un moteur

3. Dispositif (1) de ventilation selon l'une des revendications 1 ou 2, **caractérisé en ce que** la zone (5) amont est équipée intérieurement d'au moins un filtre (19) interposé entre les entrées (13, 14) d'air et le générateur (4) de flux d'air.

4. Dispositif (1) de ventilation selon l'une des revendications 1 à 3, **caractérisé en ce que** les sorties (11 ; 12) d'air obturables de la première chambre (9) et de la deuxième chambre (10) qui débouchent dans une même bouche (7) de sortie d'air sont munies chacune au moins d'un organe d'obturation (21, 22) et d'un organe (23, 24) de commande d'entraînement en déplacement dudit organe (21, 22) d'obturation entre une position ouverte et une position fermée.

5. Dispositif (1) de ventilation selon la revendication 4, **caractérisé en ce que** ledit organe (21, 22) d'obturation est un organe d'obturation individuel.

6. Dispositif (1) de ventilation selon l'une des revendications 4 ou 5, **caractérisé en ce que** l'organe (21, 22) d'obturation d'au moins l'une des sorties (11, 12) d'air est une vanne papillon et l'organe (23, 24) de commande d'entraînement en déplacement dudit organe (21, 22) d'obturation, un moteur.

7. Dispositif (1) de ventilation selon l'une des revendications 1 à 6, **caractérisé en ce que** le système (25) de chauffage et/ou de refroidissement comprend un échangeur de chaleur air/air et/ou un échangeur air/liquide et/ou une pompe à chaleur et/ou au moins une résistance électrique.

8. Dispositif (1) de ventilation selon l'une des revendications 1 à 7, **caractérisé en ce qu'**au moins l'une des bouches (7) de sortie d'air s'étend extérieurement en saillie de la paroi (3) du caisson (2) pour former un tronçon de conduit.

9. Dispositif (1) de ventilation selon l'une des revendications 1 à 8, **caractérisé en ce qu'**il comprend une unité (26) de pilotage configurée pour piloter au moins les organes (17, 18) de commande d'entraînement en déplacement des organes (15, 16) d'obturation des entrées (13, 14) d'air.

10. Dispositif (1) de ventilation selon la revendication 9, **caractérisé en ce qu'**il comprend des moyens (27) de fourniture de données à ladite unité (26) de pilotage, et **en ce que** l'unité (26) de pilotage est configurée pour piloter au moins les organes (17, 18) de commande d'entraînement en déplacement des organes (15, 16) d'obturation des entrées (13, 14) d'air en fonction desdites données.

11. Dispositif (1) de ventilation selon la revendication 10, **caractérisé en ce que** les moyens (27) de fourniture de données à ladite unité (26) de pilotage comprennent au moins un capteur (271) de température et un capteur (272) de la qualité d'air.

## Patentansprüche

1. Belüftungsvorrichtung (1) zum Belüften und Heizen oder Klimatisieren des Innenraums eines Bauwerks (30), wobei die Vorrichtung (1) ein Gehäuse (2) umfasst, das von Wänden (3) begrenzt ist, wobei das Gehäuse (2) einen Erzeuger (4) eines Luftstroms wie einen Lüfter aufnimmt, der im Inneren des Gehäuses (2) eine Zone (5) begrenzt, der sich dem Luftstromerzeuger (4) vorgelagert erstreckt, und eine Zone (6), die sich dem Luftstromerzeuger (4) nachgelagert erstreckt, betrachtet in Bezug auf die Zirkulationsrichtung des Luftstroms im Inneren des Gehäuses (2), wobei das Gehäuse (2) im Bereich der vorgelagerten Zone (5) mit mindestens zwei verschließbaren Lufteinlässen (13, 14) ausgestattet ist, die imstande sind, der eine, bezeichnet als Außenlufteinlass (13), mit Luft versorgt zu werden, die außerhalb des Bauwerks (30) entnommen wird, der andere, bezeichnet als Innenlufteinlass (14), mit Luft, die innerhalb des Bauwerks (30) entnommen wird, wobei das Gehäuse (2) im Bereich der nachgelagerten Zone (6) mindestens zwei kanalisierbare Luftauslassöffnungen (7) und mindestens eine Trennwand (8) umfasst, die die nachgelagerte Zone (6) in eine erste Kammer (9), die mit mindestens einem Teil eines Heiz- und/oder Kühlsystems (25) der Luft ausgestattet ist, und in eine zweite Kammer (10) unterteilt, wobei die erste und zweite Kammer (9; 10) jeweils mindestens zwei verschließbare Luftauslässe (11; 12) umfassen, wobei mindestens einer der Luftauslässe (11) der ersten Kammer (9) und mindestens einer der Luftauslässe (12) der zweiten Kammer (10) in derselben Luftauslassöffnung (7) ausmünden,
**dadurch gekennzeichnet, dass** die zweite Kammer (10) ohne Luft-Heiz- und/oder Kühlsystem ist und dass die Lufteinlässe (13, 14) der vorgelagerten Zone (5) des Gehäuses (2) jeweils mit mindestens einem Verschlussorgan (15, 16) und mindestens einem Steuerorgan (17, 18) für den Antrieb der Bewegung des mindestens einen Verschlussorgans (15, 16) zwischen einer geöffneten Position und einer geschlossenen Position ausgestattet sind.

2. Belüftungsvorrichtung (1) nach Anspruch 1, **dadurch gekennzeichnet, dass** das Verschlussorgan (15, 16) von mindestens einem der Lufteinlässe (13, 14) eine Absperrklappe und das Steuerorgan (17, 18) für den Antrieb der Bewegung des Verschlussorgans (15, 16) ein Motor ist.

3. Belüftungsvorrichtung (1) nach einem der Ansprüche 1 oder2, **dadurch gekennzeichnet, dass** die vorgelagerte Zone (5) innen mit mindestens einem Filter (19) ausgestattet ist, der zwischen den Lufteinlässen (13, 14) und dem Erzeuger (4) des Luftstroms angeordnet ist.

4. Belüftungsvorrichtung (1) nach einem der Ansprüche 1 bis 3, **dadurch gekennzeichnet, dass** die verschließbaren Luftauslässe (11; 12) der ersten Kammer (9) und der zweiten Kammer (10), die in dieselbe Luftauslassöffnung (7) ausmünden, jeweils mit mindestens einem Verschlussorgan (21, 22) und einem Steuerorgan (23, 24) für den Antrieb der Bewegung des Verschlussorgans (21, 22) zwischen einer geöffneten Position und einer geschlossenen Position ausgestattet sind.

5. Belüftungsvorrichtung (1) nach Anspruch 4, **dadurch gekennzeichnet, dass** das Verschlussorgan (21, 22) ein individuelles Verschlussorgan ist.

6. Belüftungsvorrichtung (1) nach einem der Ansprüche 4 oder 5, **dadurch gekennzeichnet, dass** das Verschlussorgan (21, 22) von mindestens einem der Luftauslässe (11, 12) eine Absperrklappe und das Steuerorgan (23, 24) für den Antrieb der Bewegung des Verschlussorgans (21, 22) ein Motor ist.

7. Belüftungsvorrichtung (1) nach einem der Ansprüche 1 bis 6, **dadurch gekennzeichnet, dass** das Heiz- und/oder Kühlsystem (25) einen Luft/Luft-Wärmetauscher und/oder einen Luft/Flüssigkeits-Wärmetauscher und/oder eine Wärmepumpe und/oder mindestens einen elektrischen Widerstand umfasst.

8. Belüftungsvorrichtung (1) nach einem der Ansprüche 1 bis 7, **dadurch gekennzeichnet, dass** sich mindestens eine der Luftauslassöffnungen (7) außen aus der Wand (3) des Gehäuses (2) hervorragend erstreckt, um einen Leitungsabschnitt zu bilden.

9. Belüftungsvorrichtung (1) nach einem der Ansprüche 1 bis 8, **dadurch gekennzeichnet, dass** sie eine Steuerungseinheit (26) umfasst, die ausgelegt ist, um mindestens die Steuerorgane (17, 18) für den Antrieb der Bewegung der Verschlussorgane (15, 16) der Lufteinlässe (13, 14) zu steuern.

10. Belüftungsvorrichtung (1) nach Anspruch 9, **dadurch gekennzeichnet, dass** sie Mittel (27) für die Bereitstellung von Daten für die Steuerungseinheit (26) umfasst und dass die Steuerungseinheit (26) ausgelegt ist, um mindestens die Steuerorgane (17, 18) für den Antrieb der Bewegung der Verschlussorgane (15, 16) der Lufteinlässe (13, 14) in Abhängigkeit von den Daten zu steuern.

11. Belüftungsvorrichtung (1) nach Anspruch 10, **dadurch gekennzeichnet, dass** die Mittel (27) für die Bereitstellung von Daten für die Steuerungseinheit (26) mindestens einen TemperaturSensor (271) und einen Luftqualitäts-Sensor (272) umfassen.

## Claims

1. A ventilation device (1) for the ventilation and the heating or the air conditioning of the indoor space of a building (30), the device (1) comprising a box (2) delimited by walls (3), said box (2) housing a generator (4) of an air flow, such as a fan, delimiting, inside the box (2), a zone (5) extending upstream of the air flow generator (4) and a zone (6) extending downstream of the air flow generator (4) considered relative to the direction of circulation of the air flow inside the box (2), said box (2) being equipped at the upstream zone (5) with at least two closable air inlets (13, 14), one of which, called outside air inlet (13), is able to be supplied with air taken from outside the building (30), the other of which, called inside air inlet (14), is able to be supplied with air taken from inside the building (30), said box (2) comprising, at the downstream zone (6), at least two so-called ductable air outlet mouths (7) and at least one partition (8) dividing said downstream zone (6) into a first chamber (9) which is equipped with at least part of an air heating and/or cooling system (25) and a second chamber (10), the first and second chambers (9; 10) each comprising at least two closable air outlets (11; 12), at least one of the air outlets (11) of the first chamber (9) and at least one of the air outlets (12) of the second chamber (10) opening into a same air outlet mouth (7),
**characterized in that** the second chamber (10) is devoid of air heating and cooling system and **in that** the air inlets (13, 14) of the upstream zone (5) of the box (2) are each provided with at least one closing member (15, 16) and at least one member (17, 18) for controlling driving of the movement of said at least one closing member (15, 16) between an open position and a closed position.

2. The ventilation device (1) according to claim 1, **characterized in that** the member (15, 16) for closing at least one of the air inlets (13, 14) is a butterfly valve and the member (17, 18) for controlling driving of the movement of said closing member (15, 16) is a motor.

3. The ventilation device (1) according to one of claims 1 or 2, **characterized in that** the upstream zone (5) is inwardly equipped with at least one filter (19) inserted between the air inlets (13, 14) and the air flow generator (4).

4. The ventilation device (1) according to one of claims 1 to 3, **characterized in that** the closable air outlets (11; 12) of the first chamber (9) and of the second chamber (10) which open into a same air outlet mouth (7) are each provided with at least one closing member (21, 22) and with a member (23, 24) for controlling driving of the movement of said closing member (21, 22) between an open position and a closed position.

5. The ventilation device (1) according to claim 4, **characterized in that** said closing member (21, 22) is an individual closing member.

6. The ventilation device (1) according to one of claims 4 or 5, **characterized in that** the closing member (21, 22) of at least one of the air outlets (11, 12) is a butterfly valve and the member (23, 24) for controlling driving of the movement of said closing member (21, 22) is a motor.

7. The ventilation device (1) according to one of claims 1 to 6, **characterized in that** the heating and/or cooling system (25) comprises an air/air heat exchanger and/or an air/liquid exchanger and/or a heat pump and/or at least one electrical resistance.

8. The ventilation device (1) according to one of claims 1 to 7, **characterized in that** at least one of the air outlet mouths (7) extends outwardly protruding from the wall (3) of the box (2) to form a duct section.

9. The ventilation device (1) according to one of claims 1 to 8, **characterized in that** it comprises a steering unit (26) configured to steer at least the members (17, 18) for controlling driving of the movement of the closing members (15, 16) of the air inlets (13, 14).

10. The ventilation device (1) according to claim 9, **characterized in that** it comprises means (27) for supplying data to said steering unit (26), and **in that** the steering unit (26) is configured to steer at least the members (17, 18) for controlling driving of the movement of the closing members (15, 16) of the air inlets (13, 14) based on said data.

11. The ventilation device (1) according to claim 10, **characterized in that** the means (27) for supplying data to said steering unit (26) comprise at least a temperature sensor (271) and an air quality sensor (272).
